(19) **Europäisches Patentamt / European Patent Office / Office européen des brevets**

(11) **EP 3 950 278 B1**

(12) **EUROPEAN PATENT SPECIFICATION**

(45) Date of publication and mention of the grant of the patent:
**18.09.2024 Bulletin 2024/38**

(21) Application number: **19928390.4**

(22) Date of filing: **10.05.2019**

(51) International Patent Classification (IPC):
**B23K 26/324** *(2014.01)*    **B23K 26/352** *(2014.01)*
**B29C 37/00** *(2006.01)*    **B29C 45/14** *(2006.01)*
**B29C 65/02** *(2006.01)*    **B29C 65/06** *(2006.01)*
**B29C 65/08** *(2006.01)*    **B29C 65/16** *(2006.01)*
**B29C 65/46** *(2006.01)*    **B29C 39/10** *(2006.01)*
**B29C 43/18** *(2006.01)*    **B29C 48/15** *(2019.01)*
**B29C 49/20** *(2006.01)*    **B29C 65/82** *(2006.01)*
**B29K 705/00** *(2006.01)*    **B23K 103/02** *(2006.01)*
**B23K 103/08** *(2006.01)*    **B23K 103/10** *(2006.01)*
**B23K 103/12** *(2006.01)*    **B23K 103/16** *(2006.01)*

(52) Cooperative Patent Classification (CPC):
**B23K 26/3584; B23K 26/324; B29C 37/0082;
B29C 45/14311; B29C 65/02; B29C 65/06;
B29C 65/08; B29C 65/16; B29C 65/46;
B29C 66/0246; B29C 66/1122; B29C 66/30322;
B29C 66/721; B29C 66/73751; B29C 66/7392;**

(Cont.)

(86) International application number:
**PCT/JP2019/018781**

(87) International publication number:
**WO 2020/230199 (19.11.2020 Gazette 2020/47)**

(54) **METAL MEMBER FOR BONDING, AND BONDED BODY**

METALLELEMENT ZUM VERBINDEN UND VERBUNDENER KÖRPER

ÉLÉMENT MÉTALLIQUE DE LIAISON, ET CORPS LIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.02.2022 Bulletin 2022/06**

(73) Proprietor: **Resonac Corporation
Tokyo 105-7325 (JP)**

(72) Inventor: **YAMAZAKI, Satoru
Tagawa-shi, Fukuoka 825-0005 (JP)**

(74) Representative: **Hoffmann Eitle
Patent- und Rechtsanwälte PartmbB
Arabellastraße 30
81925 München (DE)**

(56) References cited:
EP-A1- 2 574 441        EP-A2- 3 498 416
WO-A1-2004/028731     WO-A1-2009/151099
WO-A1-2018/021392     WO-A2-2018/062828
DE-A1- 102016 214 630   JP-A- 2013 071 312
JP-A- 2014 065 288       JP-A- 2014 065 288
JP-A- 2015 142 960       JP-A- 2016 043 561
JP-A- 2016 120 648       JP-A- 2016 121 745
JP-A- 2016 132 131       JP-A- 2017 524 554

(52) Cooperative Patent Classification (CPC): (Cont.)
**B29C 66/7394; B29C 66/742; B29C 66/7422;**
**B29C 66/74281;** B23K 2103/02; B23K 2103/08;
B23K 2103/10; B23K 2103/12; B23K 2103/172;
B23K 2103/18; B29C 39/10; B29C 43/18;
B29C 48/15; B29C 65/0672; B29C 65/8253;
B29C 66/0346; B29C 2791/009

## Description

Technical Field

The present disclosure relates to a metal member for joining and a joined body.

In various formed bodies used for vehicles and the like, there have been considered, for the purpose of weight reduction, dissimilar metal joining between a steel material and a lightweight metal material such as an aluminum alloy or a magnesium alloy, dissimilar material joining between a steel material or a lightweight metal material and a resin material, and the like. Further weight reduction can be expected by joining dissimilar materials of a steel material or a lightweight metal material and a resin material.

Therefore, a method of manufacturing a new composite component by joining and integrating a metal formed body and a resin formed body has been considered. For example, as a method of increasing a processing speed and also increasing a joining strength in different directions, a method of roughening a surface of a metal formed body and a method of manufacturing a composite formed body have been proposed in which the surface of the metal formed body is roughened by continuously irradiating the surface of the metal formed body with laser light at an irradiation speed of 2,000 mm/sec or more with use of a continuous wave laser (see, for example, JP 5 774246 A and JP 5 701414 A).

EP 2 574 441 A1 forming the basis for the preamble of claim 1 discloses a metal member for joining comprising a surface that comprises a smooth part and an uneven part, the uneven part including a plurality of concavities and a plurality of protrusions. WO 2018/062828 A2 discloses a joined body of different materials including a metal layer and a resin layer and the metal layer has etching grooves with a width of entrance from 10 $\mu$m to 25 $\mu$m. DE 10 2016 214 630 A1 discloses a member including concavities and protrusions for a face press connection. JP 2014-065288 A discloses a composite molded body in which a metal molded body and a resin molded body are joined wherein the metal body has a plurality of grooves and projections on opposite sides of the respective groove. WO 2004/028731 A1 discloses a metal member including projections and the maximum height of the projections is about 1.5 mm.

## SUMMARY OF INVENTION

Technical Problem

However, in JP 5 774246 A and JP 5 701414 A, in a case in which the metal formed body is roughened, although a convex shape is formed at the surface of the metal formed body, a convex shape is hardly formed at a position higher than the reference surface in some cases. Therefore, a sufficient anchor effect cannot be obtained, and the joining characteristic between the roughened metal formed body and the resin formed body or the like may be insufficient.

The present disclosure has been made in view of the above conventional circumstances, and an object of the disclosure is to provide a metal member for joining having excellent joining strength with a resin member, and a joined body obtained by joining the metal member for joining and the resin member to each other.

Solution to Problem

A metal member for joining according to the invention is defined in claim 1. Embodiments are defined in the dependent claims.

A joined body according to the invention is defined in claim 5.

Advantageous Effects of Invention

The disclosure can provide a metal member for joining having excellent joining strength with a resin member, and a joined body obtained by joining the metal member for joining and the resin member to each other.

## BRIEF DESCRIPTION OF DRAWINGS

Fig. 1 is an electron micrograph of an uneven part of an aluminum test piece in Example
Fig. 2 is an electron micrograph of an uneven part of a copper test piece in Example 2.
Fig. 3 is a cross-sectional photograph obtained by photographing a cross section of a surface having a smooth part and an uneven part in one embodiment of the metal member for joining from a position higher than a reference surface (an electron micrograph of an uneven part of a brass test piece in Example 3).
Fig. 4 is an enlarged cross-sectional photograph of an uneven part in one embodiment of the metal member for joining (an enlarged electron micrograph of an uneven part of a brass test piece in Example 3).
Fig. 5 is an electron micrograph of an uneven part of an aluminum test piece in Comparative Example 1.
Fig. 6A and Fig. 6B are diagrams for describing the shape of a test piece in accordance with ISO19095.

DESCRIPTION OF EMBODIMENTS

Embodiments of the disclosure are described below in detail. It is noted here, however, that the disclosure is not restricted to the below-described embodiments. In the below-described embodiments, the constituents thereof (including element steps and the like) are not indispensable unless otherwise specified. The same applies to the numerical values and ranges thereof, without restricting the disclosure.

In the disclosure, those numerical ranges that are expressed with "to" each denote a range that includes the numerical values stated before and after "to" as the minimum value and the maximum value, respectively.

In a set of numerical ranges that are stated stepwisely in the disclosure, the upper limit value or the lower limit value of a numerical range may be replaced with the upper limit value or the lower limit value of other numerical range. Further, in a numerical range stated in the disclosure, the upper limit or the lower limit of the numerical range may be replaced with a relevant value indicated in any of Examples.

In the disclosure, a component may include a plurality of different substances corresponding thereto. When there are plural kinds of substances that correspond to a component of a composition, the indicated content ratio or content amount of the component in the composition means, unless otherwise specified, the total content ratio or content amount of the plural kinds of substances existing in the composition.

In the disclosure, particles corresponding to a component may include a plurality of different kinds of particles. When there are plural kinds of particles that correspond to a component of a composition, the indicated particle size of the component in the composition means, unless otherwise specified, a value determined for a mixture of the plural kinds of particles existing in the composition.

In the disclosure, "(meth)acrylic" means at least one of acrylic and methacrylic.

<Metal member for joining>

A metal member for joining according to the disclosure includes a surface that includes a smooth part and an uneven part, the uneven part including a plurality of concavities and a plurality of protrusions, in which, when a surface of the smooth part is defined as a reference surface, a given number of the concavities and a given number of the protrusions satisfy the following formula (1).

$$(1)\ X < Y$$

In formula (1), X represents a maximum width of the concavities at the same height as the reference surface, and Y represents a maximum width of the protrusions, adjacent to the concavities, at an outer side of the reference surface and in a direction parallel to the reference surface.

The metal member for joining according to the disclosure has excellent joining strength with the resin member when the surface that includes the smooth part and the uneven part in the metal member for joining is joined to the resin member. The reason why the metal member for joining according to the disclosure has excellent joining strength with the resin member is for example assumed as follows. In the metal member for joining according to the disclosure, a given number of the protrusions have a region (hereinafter also referred to as "specific region") in which the maximum width Y in a direction parallel to the reference surface is larger than the maximum width X of the concavities adjacent to the protrusions and at the same height as the reference surface (hereinafter, the protrusion having such a region is also referred to as "specific protrusion"). As a result, it is assumed that since the surface area of the portion to be joined to the resin member is increased and a sufficient anchor effect can be obtained, the joining strength with the resin member becomes excellent, as compared with a metal member for joining, without any protrusions, a metal member for joining that has a protrusion whose width becomes smaller toward the tip side like a taper and does not have any specific protrusions formed in the metal member for joining according to the disclosure, or the like.

Hereinafter, the metal member for joining according to the disclosure will be described with reference to the drawings.

In the following embodiment, as an example of the metal member for joining, the metal member for joining according to the disclosure will be described on the basis of a metal member for joining formed by irradiating a surface of a metal member including aluminum with laser light to provide an uneven part. However, a material constituting the metal member for joining, a method of manufacturing the metal member for joining, and the like are not limited.

The size of the members in each figure is conceptual, and the relative relationship of size between members is not limited to this.

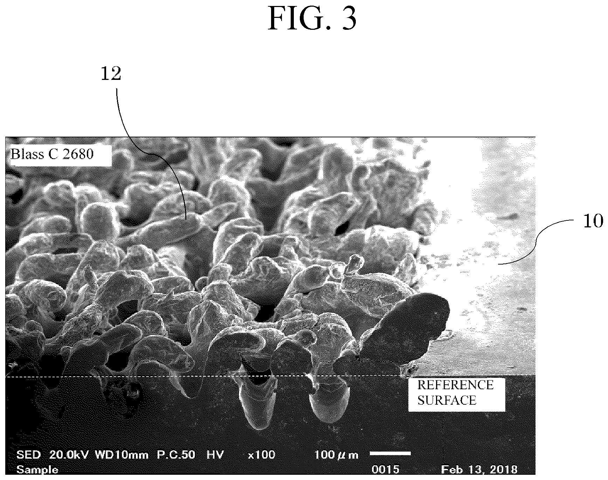

Fig. 3 is a cross-sectional photograph obtained by photographing a cross section of the surface having the smooth part and the uneven part in one embodiment of the metal member for joining from a position higher than the reference surface. In Fig. 3, a cross section of a portion including the smooth part and the uneven part on the surface having the smooth part and the uneven part is shown.

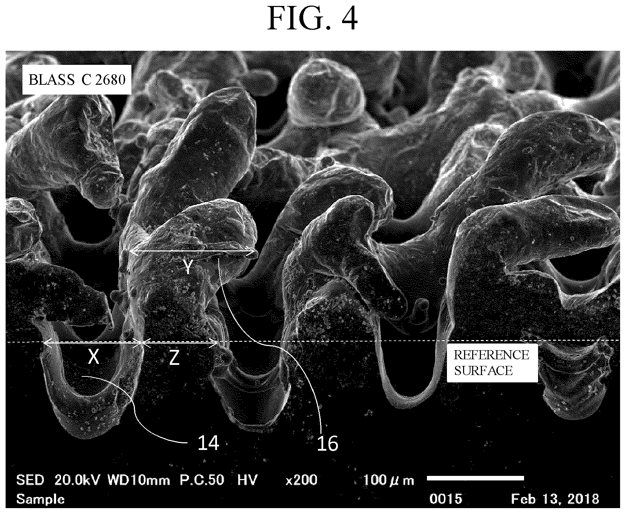

Fig. 4 is an enlarged cross-sectional photograph of the uneven part in one embodiment of the metal member for joining, and corresponds to an electron micrograph of the uneven part of an aluminum test piece in Example 1 described below. In Fig. 4, the portion where the reference surface is extended to the whole of the surface having the smooth part and the uneven part in the metal member for joining, is shown as the reference line.

As shown in Fig.3, a smooth part 10 and an uneven part 12 are exist in one surface of the metal member for joining. As shown in Fig.4, a plurality of concavities 14 and a plurality of protrusions 16 are respectively exist in the uneven part 12. Further, the concavities 14 and the protrusions 16 exist, in which the maximum width Y of the protrusions 16 at the outer side of the reference surface and in a direction parallel to the reference surface is larger than the maximum width X of the concavities 14 at the same height as the reference surface, that is, satisfies $X < Y$. As shown in Fig. 4, the protrusions 16 have bent structures at a side of a leading end.

Further, as shown in Fig.4, the maximum width Y of the protrusions 16 is larger than the maximum width Z of the protrusions 16 at the reference surface, the protrusions 16 have the aforementioned specific region at the outer side of the reference surface, and at least a part of the specific region faces at least a part of the concavities adjacent to the protrusions 16. As a result, an anchor effect is suitably exhibited by the resin member entering between the specific region and the concavities, and the joining strength with the resin member is likely to be improved.

In a case in which at least a part of the specific region faces at least a part of the concavities adjacent to the protrusions 16, the concavities may satisfy formula (1), or may not satisfy formula (1) in the relationship with the protrusions 16.

An average depth of the concavities 14 is from 100 $\mu$m to 1.5 mm, preferably from 200 $\mu$m to 1 mm, and more preferably from 300 $\mu$m to 800 $\mu$m.

In a case in which the metal constituting the metal member for joining is aluminum, the average depth of the concavities is preferably from 200 $\mu$m to 1.5 mm, more preferably from 250 $\mu$m to 1 mm, and still more preferably from 300 $\mu$m to 800 $\mu$m.

In a case in which the metal constituting the metal member for joining is copper, the average depth of the concavities is preferably from 100 $\mu$m to 500 $\mu$m, more preferably from 150 $\mu$m to 400 $\mu$m, and still more preferably from 200 $\mu$m to 300 $\mu$m.

In a case in which the metal constituting the metal member for joining is copper-zinc alloy, the average depth of the concavities is preferably from 50 $\mu$m to 300 $\mu$m, more preferably from 100 $\mu$m to 200 $\mu$m, and still more preferably from 100 $\mu$m to 150 $\mu$m.

An average height of the protrusions 16 is from 100 $\mu$m to 500 $\mu$m, and preferably from 200 $\mu$m to 300 $\mu$m. The average height of the protrusions 16 may be lower than the average depth of the concavities 14.

In a case in which the metal constituting the metal member for joining is aluminum, the average height of the protrusions is preferably from 150 $\mu$m to 500 $\mu$m, and still more preferably from 200 $\mu$m to 300 $\mu$m.

In a case in which the metal constituting the metal member for joining is copper, the average height of the protrusions is from 100 $\mu$m to 200 $\mu$m.

In a case in which the metal constituting the metal member for joining is copper-zinc alloy, the average height of the protrusions is preferably from 100 $\mu$m to 200 $\mu$m, and preferably from 100 $\mu$m to 150 $\mu$m.

In the disclosure, the depth of the concavity means the distance between the reference surface and the surface that is parallel to the reference surface and passes through the lowest position of the concavity when observing a cross section orthogonal to the reference surface.

In the disclosure, the height of the protrusion means the distance between the reference surface and the surface that is parallel to the reference surface and passes through the highest position of the protrusion when observing a cross section orthogonal to the reference surface.

In the disclosure, the average depth of the concavities means the arithmetic mean value of the depth of the five concavities.

In the disclosure, the average height of the protrusions means the arithmetic mean value of the height of the five protrusions.

In the uneven part 12, when viewed from the direction orthogonal to the reference surface, the density of the protrusions 16 are each independently preferably form 5 protrusions/mm$^2$ to 50 protrusions/mm$^2$, more preferably from 10 protrusions/mm$^2$ to 30 protrusions/mm$^2$, and still more preferably from 10 protrusions/mm$^2$ to 25 protrusions/mm$^2$.

A maximum width X of the concavities 14 at the same height as the reference surface is preferably from 50 $\mu$m to 300 $\mu$m.

In a case in which the metal constituting the metal member for joining is aluminum, the maximum width X of the concavities at the same height as the reference surface may be from 100 μm to 300 μm, or may be from 120 μm to 250 μm.

In a case in which the metal constituting the metal member for joining is copper, the maximum width X of the concavities at the same height as the reference surface may be from 50 μm to 200 μm, or may be from 80 μm to 150 μm.

In a case in which the metal constituting the metal member for joining is copper-zinc alloy, the maximum width X of the concavities at the same height as the reference surface may be from 50 μm to 150 μm, or may be from 50 μm to 100 μm.

A maximum width Y of the protrusions 16 at an outer side of the reference surface and in a direction parallel to the reference surface is not particularly limited as long as it is larger than the maximum width X, and preferably from 100 μm to 1000 μm.

In a case in which the metal constituting the metal member for joining is aluminum, the maximum width Y of the protrusions in a direction parallel to the reference surface may be from 300 μm to 1000 μm, or may be from 400 μm to 800 μm.

In a case in which the metal constituting the metal member for joining is copper, the maximum width Y of the protrusions in a direction parallel to the reference surface may be from 100 μm to 400 μm, or may be from 150 μm to 300 μm.

In a case in which the metal constituting the metal member for joining is copper-zinc alloy, the maximum width Y of the protrusions in a direction parallel to the reference surface may be from 100 μm to 250 μm, or may be from 100 μm to 200 μm.

A maximum width Z of the protrusions 16 on the reference surface is preferably from 50 μm to 300 μm.

In a case in which the metal constituting the metal member for joining is aluminum, the maximum width Z of the protrusions on the reference surface may be from 100 μm to 300 μm, or may be from 120 μm to 250 μm.

In a case in which the metal constituting the metal member for joining is copper, the maximum width Z of the protrusions on the reference surface may be from 50 μm to 200 μm, or may be from 80 μm to 150 μm.

In a case in which the metal constituting the metal member for joining is copper-zinc alloy, the maximum width Z of the protrusions on the reference surface may be from 50 μm to 150 μm, or may be from 50 μm to 100 μm.

The given number of the concavities and the given number of the protrusions preferably satisfy the following formula (2) in terms of joining strength with the resin member.

$$(2)\ 1.5X < Y < 5X$$

In formula (2), X and Y are the same as X and Y in formula (1).

A ratio of the aforementioned specific protrusions (protrusions 16 in Fig. 4) in whole protrusions is not particularly limited and, in terms of joining strength with the resin member, may be 50% by number or more, or may be 80% by number or more. The ratio of the aforementioned specific protrusions in whole protrusions may be 90% by number or less.

A metal constituting the metal member for joining is not limited, and can be selected appropriately from known metal materials in accordance with application of the joined body formed with use of the metal member for joining. Examples of the metal constituting the metal member for joining include iron, aluminum, zinc, titanium, copper, magnesium, and alloys including these metals. Examples of the alloy include various stainless steels and copper-zinc alloys.

The surface having the smooth part and the uneven part of the metal member for joining may be subjected to surface treatment such as plating treatment or alumite treatment.

A shape of the metal member for joining is not limited, and can be selected appropriately in accordance with the application of the joined body formed with use of the metal member for joining. Examples of the shape of the metal member for joining include a plate shape, a spherical shape, a shape having a curved surface, and a shape having a step.

The surface having the uneven part of the metal member for joining may be a flat surface.

A method of forming the uneven part on the metal member is not limited. Examples of the method of forming the uneven part on the metal member include a method of irradiating the surface of the metal member with laser light to provide the uneven part as described above.

Hereinafter, various conditions and the like when adopting a method of irradiating the surface of the metal member with laser light to provide the uneven part will be described.

The following various conditions are set appropriately in terms of a type of metal constituting the metal member for joining, the depth of the concavities, the height of the protrusions, period and height of a partition wall provided as needed and the like.

In a case in which the uneven part is provided by irradiating the surface of the metal member with laser light, a pulse laser or a continuous wave (CW) laser may be used. In a case in which the CW laser is used, the CW laser may be a modulated CW laser in which power of the laser is periodically changed.

In the case in which the CW laser is used, an irradiation speed (scan speed) of the CW laser is not limited.

The irradiation speed of the CW laser is preferably from 100 mm/sec to 2,000 mm/sec.

When the irradiation speed of the CW laser is 100 mm/sec or more, a processing speed of the metal member is likely to be increased. When the irradiation speed of the CW laser is 2,000 mm/sec or less, at least a part of the concavities and at least a part of the protrusions are likely to satisfy the relationship of the aforementioned formula (1), and the joining strength with the resin member is likely to be further improved.

An irradiation output of the laser is not limited.

For example, in the case in which the CW laser is used, the laser output is preferably from 300W to 2,000W.

When the laser output of the CW laser is 300W or more, the irradiation speed of the CW laser is easily increased, and the processing speed of the metal member is likely to be increased. When the laser output of the CW laser is 2,000W or less, an irradiation facility of a laser light is likely to be miniaturized.

A spot diameter of the laser is not limited.

For example, the spot diameter of the laser is preferably from 10 μm to 50 μm.

In a case in which the modulated CW laser is used, a modulation method may be a sine wave, a triangular wave, or a rectangular wave.

A frequency of the modulated CW laser is preferably from 1,000 Hz to 10,000 Hz.

In the modulated CW laser, a minimum value of the laser output when a maximum value of the laser output is 100 is preferably 30 or more but less than 100, more preferably from 50 to 95, and still more preferably from 80 to 90.

In a case in which the surface of the metal member is irradiated with laser light, the uneven part may be provided by wobbling.

The laser light may be repeatedly emitted to a part irradiated once with the laser light. In a case in which the laser light is repeatedly emitted, the number of repetitions is preferably from 1 to 40 and more preferably from 5 to 40.

As the laser, a solid laser such as a ruby laser, a yttrium aluminum garnet (YAG) laser, or a titanium sapphire laser, a liquid laser such as a dye laser, a gas laser such as a helium neon laser, an argon ion laser, a carbon dioxide gas laser, a nitrogen laser, or an excimer laser, a semiconductor laser, a fiber laser, or the like can be used.

The laser may be a green laser.

When the uneven part is provided by irradiating the surface of the metal member with the laser light, compressed air may be supplied to a part irradiated with the laser light on the surface of the metal member. A pressure of the supplied compressed air is preferably from 0.2 MPa to 0.5 MPa in terms of efficiently removing metal powder generated by irradiation with the laser light.

When the laser light is linearly emitted, a scanning interval of the laser light is preferably larger than the spot diameter of the laser light.

<Joined body>

A joined body according to the disclosure includes the metal member for joining according to the disclosure, and the resin member joined to the surface having the smooth part and the uneven part of the metal member for joining.

Since the resin member is joined to the surface having the smooth part and the uneven part of the metal member for joining, the joined body according to the disclosure has an excellent joining strength between the metal member for joining and the resin member.

A type of the resin constituting the resin member is not limited, and a conventionally known resin can be appropriately selected and used in accordance with the application of the joined body.

Examples of the resin include a thermosetting resin, a thermoplastic resin, and elastomer.

Specific examples of the thermosetting resin include a phenol resin, an unsaturated imide resin, a cyanate resin, an isocyanate resin, a benzoxazine resin, an oxetane resin, an amino resin, an unsaturated polyester resin, an allyl resin, a dicyclopentadiene resin, a silicone resin, a triazine resin, a melamine resin, a resorcinol resin, and an epoxy resin.

Specific examples of the thermoplastic resin include a polyimide resin, a polyamideimide resin, a polyamide resin, a polyetherimide resin, a polybenzoxazole resin, a polybenzimidazole resin, a polystyrene resin, an acrylonitrile-butadiene-styrene copolymer resin, an acrylonitrile-styrene copolymer resin, a polyethylene resin, a polypropylene resin, a polyvinyl chloride resin, a polyvinylidene chloride resin, a polycarbonate resin, a (meth) acrylic resin, a polyester resin, a polyacetal resin, and a polyphenylene sulfide resin.

Specific examples of the elastomer include silicone rubber, styrene-butadiene rubber (SBR), nitrile rubber (NBR), and urethane rubber.

The resin member may contain other conventionally known components other than the resin in accordance with the application of the joined body. Examples of other components include particulate fillers, fibrous fillers, and release agents.

Examples of other components further include a curing agent that cures the thermosetting resin, a curing accelerator that accelerates curing of the thermosetting resin, and a surface treatment agent that modifies a surface of an inorganic material.

The content of other components other than the resin included in the resin member may be appropriately set in accordance with the application of the joined body.

A method of manufacturing the joined body is not limited, and a normal method of molding a resin formed body can be adopted, such as an injection molding method, a blow molding method, a compression molding method, a transfer molding method, an extrusion molding method, or a cast molding method. A resin composition including a resin and, if necessary, other components may be applied to the surface provided with the uneven part, of the metal member for joining provided with the uneven part, as described above by an insert molding method to manufacture a joined body.

Furthermore, the metal member for joining provided with the uneven part may be brought into contact with the resin member, and then the metal member for joining and the resin member may be joined by ultrasonic welding, vibration welding, induction welding, high-frequency welding, laser welding, heat welding, spin welding, or the like.

The metal member for joining and the resin member may be joined by heating and softening a part of the resin member to be joined to the metal member for joining and then bringing the resin member and the metal member for joining into contact with each other while pressurizing the resin member and the metal member for joining.

In terms of preventing deformation of the protrusions in the uneven part and improving the joining strength, the joined body is preferably manufactured by the insert molding method.

In a case in which a thermosetting resin is used as a component of the resin member, the metal member for joining and the resin member may be joined by the above method, and then the resin member may be cured by heat treatment.

Examples of the applications of the joined body according to the disclosure include various formed bodies used in vehicles and the like, and specific examples thereof include a side door, a hood, a roof, a back door, a luggage door, a bumper, and a crash box, but are not limited thereto.

Examples

Hereinafter, the disclosure will be described based on Examples, but the disclosure is not limited thereto. Further, in the following Examples, parts and % indicate parts by mass and % by mass unless otherwise specified.

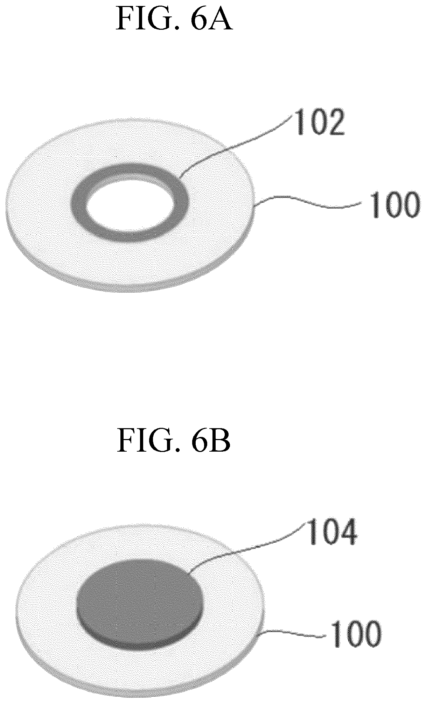

Doughnut-shaped test pieces 100 including aluminum (AL 3003), copper (C 1020), and brass (C 2680) having an outer diameter of 55 mm, an inner diameter of 20 mm, and a thickness of 2 mm in accordance with ISO19095 as illustrated in Fig. 6A were prepared.

On the test piece 100, an uneven part 102 was formed under the following conditions using a fiber laser (ML6811C (CW laser) manufactured by Amada Miyachi Co., Ltd.). A width of the uneven part 102 was set to 1.2 mm.

[Table 1]

| | | Setting Value | | | | | POM Resin |
|---|---|---|---|---|---|---|---|
| | metal | laser output | scan speed | frequency | modulated CW control | number of repetition | joining strength |
| Example 1 | AL 3003 | 350 W | 1500 mm/sec | 5,000 Hz | With control | 15 | 17.8 Mpa |
| Example 2 | C 1020 | 450 W | 1200 mm/sec | 5,000 Hz | With control | 30 | 14.7 Mpa |
| Example 3 | C 2680 | 450 W | 1500 mm/sec | 5,000 Hz | With control | 20 | 22.4 Mpa |
| Comparative Example 1 | AL 3003 | 450 W | 1500 mm/sec | 5,000 Hz | With control | 1 | 0 Mpa |

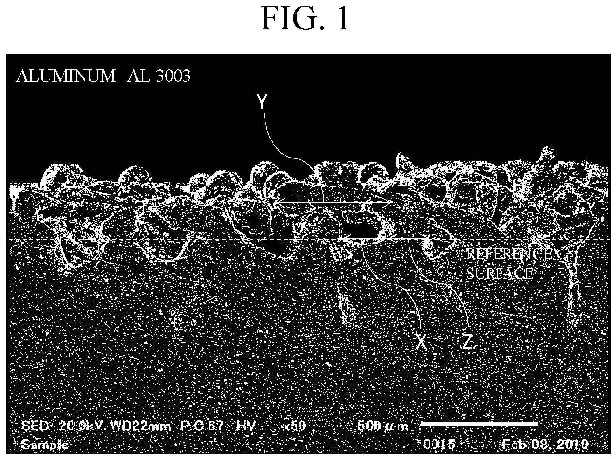

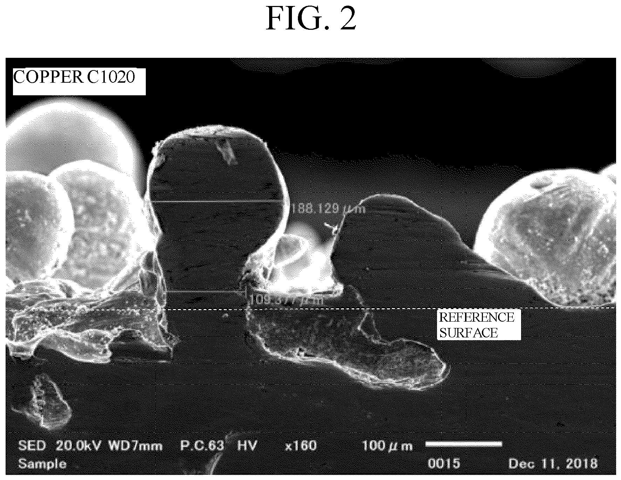

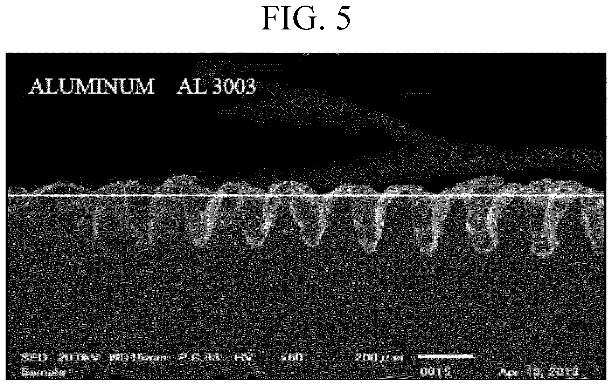

Fig. 1 illustrates an example of an electron micrograph of the uneven part of the aluminum test piece of Example 1. Fig. 2 illustrates an example of an electron micrograph of the uneven part of the copper test piece of Example 2. Fig. 3 and Fig. 4 illustrate an example of an electron micrograph of the uneven part of the brass test piece of Example 3. Fig. 5 illustrates an example of an electron micrograph of the uneven part of the aluminum test piece of Comparative Example 1.

As is apparent from Figs. 1 to 4, in at least a part of the concavities and a part of the protrusions, it turns out that the maximum width Y of the protrusions, adjacent to the concavities, at an outer side of the reference surface and in a direction parallel to the reference surface is larger than the maximum width X of the protrusions at the same height as the reference surface.

The results of the maximum width X, the maximum width Y and the maximum width Z in the specific concavities and the specific protrusions are shown in Table 2.

The electron micrographs of the test pieces were taken at an acceleration voltage of 20 kV with use of JSM-IT100 manufactured by JEOL Ltd.

On the other hand, as is apparent from Fig. 5, in the aluminum test piece of Comparative Example 1, the maximum width of the protrusions, adjacent to the concavities, at an outer side of the reference surface and in a direction parallel to the reference surface is smaller than the maximum width of the concavities at the same height as the reference surface represented by the white line.

Regarding Examples 1 to 3 and Comparative Example 1, the average height of the protrusions (the arithmetic mean value of the height of the five protrusions) and the average depth of the concavities (the arithmetic mean value of the depth of the five concavities) were determined as described above.

The result is shown in Table 2.

[Table 2]

| | metal | average height of protrusions | average depth of concavities | maximum width X | maximum width Y | maximum width Z |
|---|---|---|---|---|---|---|
| Example 1 | aluminum | 220 | 370 | 210 | 490 | 160 |
| Example 2 | copper | 100 | 220 | 130 | 188 | 110 |
| Example 3 | brass | 125 | 120 | 90 | 165 | 83 |
| Comparative Example 1 | aluminum | 17 | 200 | 140 | less than X | 37 |

Subsequently, a resin part 104 as illustrated in Fig. 6B was injection-molded under the conditions of a resin heating temperature of 210°C and a mold temperature of 80°C with use of an injection molding machine LA60 manufactured by Sodick Co., Ltd. to cover the uneven part of each test piece provided with the uneven part. A size of the resin part 104 was 26 mm in outer diameter and 2 mm in thickness. As the resin, a POM resin (standard grade M90-44) manufactured by Polyplastics Co., Ltd. was used.

By using each test piece on which the resin part was formed, the joining strength was evaluated by the following method.

-Evaluation Method-

AG-5kNIS manufactured by SHIMADZU CORPORATION was used to perform a tensile test at a test speed of 5 mm/min, the average value (N=5) of the joining strength of test pieces that are joined bodies was determined.

The average value of the joining strength of the aluminum test piece of Example 1 was 17.8 MPa.

The average value of the joining strength of the copper test piece of Example 2 was 14.7 MPa.

The average value of the joining strength of the brass test piece of Example 3 was 22.4 MPa.

The average value of the joining strength of the aluminum test piece of Comparative Example 1 was 0 MPa.

**Claims**

1. A metal member (100) for joining, comprising:

   a surface that comprises a smooth part and an uneven part (102), the uneven part including a plurality of concavities (14) and a plurality of protrusions (16),
   wherein, when a surface of the smooth part is defined as a reference surface, a given number of the concavities and a given number of the protrusions satisfy the following formula (1):

   $$(1)\ X < Y$$

   wherein, in formula (1), X represents a maximum width of the concavities at the same height as the reference surface, and Y represents a maximum width of the protrusions, adjacent to the concavities, at an outer side of the reference surface and in a direction parallel to the reference surface,
wherein X is from 50 $\mu$m to 300 $\mu$m,
wherein Y is from 100 $\mu$m to 1000 $\mu$m,
wherein an average depth of the concavities is from 100 $\mu$m to 1.5 mm, and
wherein an average height of the protrusions is from 100 $\mu$m to 500 $\mu$m.

2. The metal member for joining according to claim 1, wherein the given number of the protrusions are bent at a side of a leading end.

3. The metal member for joining according to claim 1 or claim 2, wherein the given number of the protrusions have a region in which the maximum width Y is larger than a maximum width of the given number of the protrusions at the reference surface, and the maximum width Y is larger than the maximum width X, at an outer side of the reference surface, and at least a part of the region faces at least a part of the concavities.

4. The metal member for joining according to any one of claims 1 to 3, wherein the given number of the concavities and the given number of the protrusions satisfy the following formula (2):

$$(2)\ 1.5X < Y < 5X$$

wherein, in formula (2), X and Y are the same as X and Y in formula (1).

5. A joined body, comprising:

the metal member (100) for joining according to any one of claims 1 to 4; and
a resin member (104) joined to the surface of the metal member that comprises the smooth part and the uneven part. (102).

**Patentansprüche**

1. Metallelement (100) zum Verbinden, umfassend:

eine Oberfläche, die einen glatten Teil und einen unebenen Teil (102) umfasst, wobei der unebene Teil eine Vielzahl von Konkavitäten (14) und eine Vielzahl von Vorsprüngen (16) einschließt,
wobei,
wenn eine Oberfläche des glatten Teils als eine Referenzoberfläche definiert ist, eine gegebene Anzahl der Konkavitäten und eine gegebene Anzahl der Vorsprünge die folgende Formel (1) erfüllen:

$$(1)\ X < Y$$

wobei in Formel (1) X eine maximale Breite der Konkavitäten auf der gleichen Höhe wie die Referenzoberfläche darstellt und Y eine maximale Breite der Vorsprünge, die an die Konkavitäten angrenzen, an einer Außenseite der Referenzoberfläche und in einer Richtung parallel zu der Referenzoberfläche darstellt,
wobei X zwischen 50 $\mu$m und 300 $\mu$m liegt,
wobei Y zwischen 100 $\mu$m und 1000 $\mu$m liegt,
wobei eine durchschnittliche Tiefe der Konkavitäten zwischen 100 $\mu$m und 1,5 mm liegt, und
wobei eine durchschnittliche Höhe der Vorsprünge zwischen 100 $\mu$m und 500 $\mu$m liegt.

2. Metallelement zum Verbinden nach Anspruch 1, wobei die gegebene Anzahl der Vorsprünge an einer Seite eines vorderen Endes gebogen ist.

3. Metallelement zum Verbinden nach Anspruch 1 oder Anspruch 2, wobei die gegebene Anzahl der Vorsprünge einen Bereich aufweist, in dem die maximale Breite Y größer ist als eine maximale Breite der gegebenen Anzahl der Vorsprünge an der Referenzoberfläche, und die maximale Breite Y größer ist als die maximale Breite X an einer Außenseite der Referenzoberfläche, und zumindest ein Teil des Bereichs zumindest einem Teil der Konkavitäten gegenüberliegt.

4. Metallelement zum Verbinden nach einem der Ansprüche 1 bis 3, wobei die gegebene Anzahl der Konkavitäten und die gegebene Anzahl der Vorsprünge die folgende Formel (2) erfüllen:

$$(2)\ 1{,}5X < Y < 5X$$

wobei in Formel (2) X und Y die gleichen sind wie X und Y in Formel (1).

5. Verbundener Körper, umfassend:

das Metallelement (100) zum Verbinden nach einem der Ansprüche 1 bis 4; und
ein Harzelement (104), das mit der Oberfläche des Metallelements verbunden ist, die den glatten Teil und den unebenen Teil umfasst. (102).

**Revendications**

1. Élément métallique (100) de liaison, comprenant :

une surface comprenant une partie lisse et une partie irrégulière (102), la partie irrégulière incluant une pluralité de concavités (14) et une pluralité de saillies (16),
dans lequel,
lorsqu'une surface de la partie lisse est définie comme surface de référence, un nombre donné des concavités et un nombre donné des saillies satisfont la formule suivante (1) :

$$(1)\ X < Y$$

dans lequel, dans la formule (1), X représente une largeur maximum des concavités à la même hauteur que la surface de référence, et Y représente une largeur maximum des saillies, adjacentes aux concavités, au niveau d'un côté extérieur de la surface de référence et dans une direction parallèle à la surface de référence,
dans lequel X est entre 50 $\mu$m et 300 $\mu$m,
dans lequel Y est entre 100 $\mu$m et 1000 $\mu$m,
dans lequel une profondeur moyenne des concavités est entre 100 $\mu$m et 1,5 mm, et
dans lequel une hauteur moyenne des saillies est entre 100 $\mu$m et 500 $\mu$m.

2. Élément métallique de liaison selon la revendication 1, dans lequel le nombre donné des saillies sont pliées au niveau d'un côté d'une extrémité avant.

3. Élément métallique de liaison selon la revendication 1 ou la revendication 2, dans lequel le nombre donné des saillies présentent une région dans laquelle la largeur maximum Y est supérieure à une largeur maximum du nombre donné des saillies au niveau de la surface de référence, et la largeur maximum Y est supérieure à la largeur maximum X, au niveau d'un côté extérieur de la surface de référence, et au moins une partie de la région fait face à au moins une partie des concavités.

4. Élément métallique de liaison selon l'une quelconque des revendications 1 à 3, dans lequel le nombre donné des concavités et le nombre donné des saillies satisfont la formule suivante (2) :

$$(2)\ 1{,}5X < Y < 5X$$

dans lequel, dans la formule (2), X et Y sont identiques à X et Y dans la formule (1).

5. Corps lié, comprenant :

l'élément métallique (100) de liaison selon l'une quelconque des revendications 1 à 4 ; et

un élément en résine (104) lié à la surface de l'élément métallique qui comprend la partie lisse et la partie irrégulière (102).

# FIG. 1

# FIG. 2

# FIG. 3

# FIG. 4

# FIG. 5

FIG. 6A

FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5774246 A
- JP 5701414 A
- EP 2574441 A1
- WO 2018062828 A2
- DE 102016214630 A1
- JP 2014065288 A
- WO 2004028731 A1